Europäisches Patentamt

(19) European Patent Office (11) Numéro de publication: **0 072 358**

Office européen des brevets **B1**

(12) **FASCICULE DE BREVET EUROPEEN**

(45) Date de publication du fascicule du brevet: **09.03.88** (51) Int. Cl.⁴: **F 16 B 12/34, F 16 B 7/04**

(21) Numéro de dépôt: **82830217.4**

(22) Date de dépôt: **30.07.82**

(54) Joint de montage pour éléments tubulaires des rayons d'étagères.

(30) Priorité: **05.08.81 IT 1791481**

(43) Date de publication de la demande:
**16.02.83 Bulletin 83/07**

(45) Mention de la délivrance du brevet:
**09.03.88 Bulletin 88/10**

(84) Etats contractants désignés:
**AT BE CH DE FR GB LI LU NL SE**

(56) Documents cités:
**FR-A- 767 289**
**US-A-1 460 928**
**US-A-4 124 317**

(73) Titulaire: **Amichetti, Pierino**
**Via Chiarino .**
**I-62019 Recanati (MC) (IT)**
(73) Titulaire: **Lattanzi, Angelo**
**Via Vallememoria**
**I-62019 Recanati (MC) (IT)**

(72) Inventeur: **Amichetti, Pierino**
**Via Chiarino**
**I-62019 Recanati (MC) (IT)**
Inventeur: **Lattanzi, Angelo**
**Via Vallememoria**
**I-62019 Recanati (MC) (IT)**

(74) Mandataire: **Baldi, Claudio**
**Piazza Ghislieri, 3**
**I-60035 Jesi (Ancona) (IT)**

Courier Press, Leamington Spa, England.

## Description

L'invention consiste en un joint de montage pour rayons d'étagères à éléments tubulaires, plus fonctionnel, plus esthétique et moins coûteux que les joints actuels.

Au stade actuel de la technique, le marché offre de nombreuses versions pour le montage et le reliement des éléments des rayons d'étagères métalliques.

Chacune de ces versions réussi à résoudre le problème de manière suffisament robuste, mais à des coûts élevés, peu esthétique et également de manière compliquée.

Parmi les solutions les plus élégantes, nous rappelons celles qui sont réalisées avec des mécanismes de traction encastrés dans les parties finales des segments tubulaires.

Ils sont munis d'un bouton de traction qui s'engage dans les boutonnières réalisées dans les tubes à connecter.

Ces mécanismes répondent bien à leur fonction; mais ils sont extrêmement complexes, munis de vis, de ressorts, de pivots de traction, d'arrêts centraux, de supports, etc. et certains d'eux ont une structure compliquée et fort coûteuse.

Le brevet US—A—4124317, par exemple, décrit un joint qui comprend un tirant fileté embouti frontalement par une tête prismatique qui empêche larotation du tirant autour de son propre axe longitudinal; sur cette tête, une plaquette d'accrochage est reportée; celle-ci est apte à être enfilée dans des fentes appropriées réalisées dans l'élément qui doit être accroché à l'élément tubulaire où est logé le tirant susmentionné.

· Pour mettre sous traction le tirant, un écrou circulaire est prévu qui se visse sur la tige filetée du tirant à partir de l'extrêmité postérieure. Sur la paroi circulaire dudit écrou, des trous radiaux sont prévus dans lesquels on peur enfiler une tige afin de visser l'écrou même sur le tirant.

Cette opération est facilitée du fait que le diamètre de l'écrou de serrage est exécuté de manière que l'écrou même dépasse par deux portions de segment circulaire, à travers deux fentes opposées prévues à cet effet sur l'élément tubulaire où est logé le tirant.

Différemment du joint décrit dans le brevet US—A—4124317, le joint, objet de la présente demande de brevet européen, ne prévoit aucun écrou de serrage du fait que le tirant peut être tourné autour de son propre axe longitudinal au moyen d'une clé normale qui s'engage sur la partie hexagonale qui termine postérieurement le tirant.

Une ultérieure différence, entre le joint selon US—A—4124317 et celui de la présente invention, consiste dans le fait que ce dernier n'a besoin d'aucune plaquette d'accrochage sur l'extrêmité antérieure du tirant, parce que ce dernier est terminé frontalement par un bouton circulaire d'ancrage, réalisé en une seule pièce avec le tirant même.

Pour obvier aux susmentionnés inconvénients, les demandeurs ont analisé ces mécanismes dans tous leurs éléments et ils ont supprimé tout ce qui est considéré d'être en surplus ou complique et donc augmente les coûts de production et de montage.

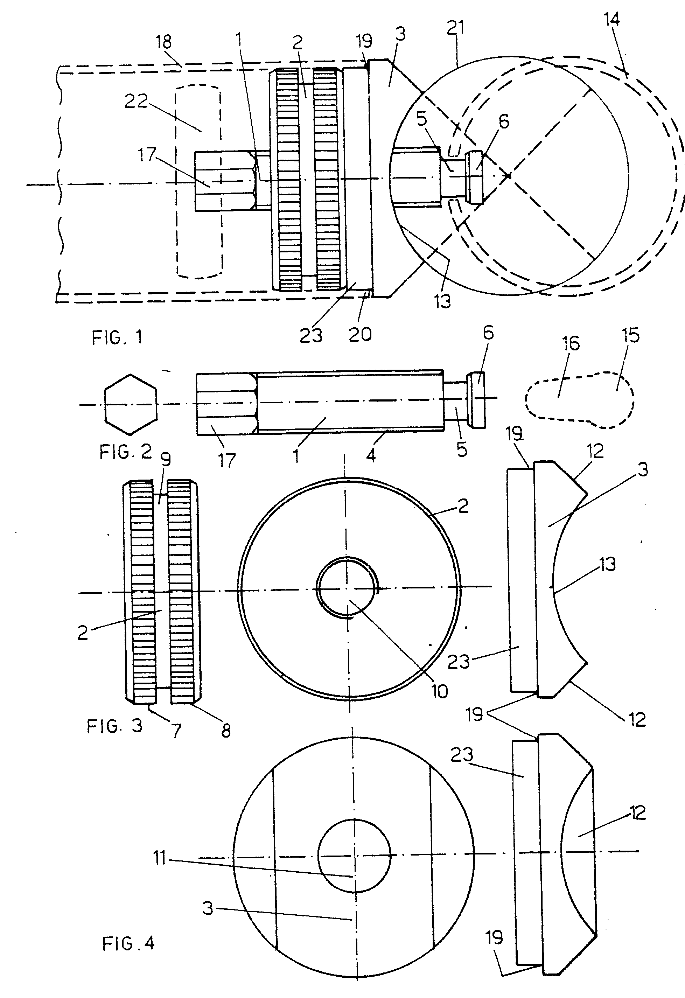

En référence à l'annexe, dans la fig. 1 on a dessiné le joint assemblé; dans cette figure une ligne très fine (21) indique le cercle de construction de l'élément de contact (3), une ligne hachurée indique le tube (14) où le joint fixe l'élément tubulaire (18), lui aussi hachuré, comme nous verrons plus profondément par la suite.

Dans une forme préférée mais non pas limitée le joint se compose de trois éléments:

— un pivot de traction ou tirant (1);
— un disque fileté et crénelé de bloc (2);
— un élément de contact, formé et ébrasé (3);

Dans les fig. 2, 3 et 4 les trois éléments sont représentés séparément.

Le tirant (1) (fig 2) consiste en un prisme hexagonal (17) en acier, fileté au point (4) pour environ les trois quarts de sa longueur, et à l'extrêmité de laquelle après le filetage (4) la tige (5) et le bouton de traction (6) sont façonnés.

Dans la fig. 3, le disque fileté de bloc (2), également en acier, est épais comme environ un tiers de son diamètre et est crénelé sur presque toute sa couronne externe, qui est divisée en deux zones (7) et (8) par une rainure (9).

Un trou fileté (10) où on visse le tirant (1) traverse le disque sur toute sa largeur et est visible par une vue frontale de droite.

Dans la fig. 4, l'élément de contact (3), moulé dans du matériel plastique ou dans de la résine à injecter, ou bien fondu ou travaillé dans du métal, qui consiste en un collier (23) troué au point (11) pour permettre le passage du pivot (1), avec deux ébrasures (12) à 45° (voir fig. 1 le cercle de construction en ligne hachurée), avec un siège (13), constitué par un creux circulaire, de rayon égal au rayon de la surface externe du tube (14), hachuré dans la fig. 1, et où s'engage le bouton de traction (6) qui s'introduit dans la boutonnière (15) et descend dans la gorge (16) où s'engage la tige (5) qui emprissonne le bouton (6).

La boutonnière et la gorge sont hachurées dans la fig. 2, sur le prolongement du pivot (1).

Les boutonnières (15) sont distribuées de manière modulaire sur une ou plusieurs génératrices des tubes (14) et sont réalisées au moyen de poinçonnages ou fraisages.

Les ébrasures (12) à 45° permettent d'adjoindre deux ou plusieurse éléments de contact (3) à la même hauteur, sur le même tube (14), pour former des accrochages doubles ou triples ou quadruples, selon les exigences du constructeur.

Pour bloquer les différents éléments du rayon d'étagère, le tirant fileté hexagonal (1) est vissé dans le trou (10) du disque (2) sur toute la longueur du filetage (4) ou presque, et le disque (2) est arrêté avec des points de poinçonnage dans la portion finale du tube (18), hachuré dans la fig. 1, à tel point vers l'intérieur, que les épaules (19) de l'élément (3) touchent l'ourlet (20) du tube (18) en question; en enfilant l'élément (3) sur le tirant (1) jusqu'à faire saillir la tige (5) et le bouton (6), le joint est prêt pour le montage.

Il suffira d'enfiler le bouton (6) dans la boutonnière (15) et d'abaisser le tout jusqu'à encastrer la tige (15) dans la gorge (16) et faire tourner le tirant hexagonal (1) avec une clé appliquée à travers la petite fenêtre (22), hachurée sur la fig. 1, jusqu'à bloquer avec force le tube (14) sur le siège (13) de l'élément (3).

L'invention, au-delà d'être simple et économique, permet de cacher les petites fenêtres (22), en faisant tourner le tube (18) tant que nécessaire, jusqu'à ce que l'élément (3) embraye sur le disque (2) qui est lui même bloqué dans le tube (18) par ses zones (7) et (8).

Des tablettes ou étagères de bois, ou de tout autre matériel apte, opportunément moulurées, constituent des fonds élégants et rapides qui peuvent être installés selon le désir du décorateur.

**Revendications**

1. Joint de montage à plusieurs éléments du type à tirant fileté (1) s'engageant dans un trou central fileté (70) d'un disque de support (2) pour l'assemblage des éléments tubulaires (14, 18) de rayons d'étagères, caractérisé par le fait qu'il est constitué par seulement trois éléments: le tirant fileté de traction (1), le disque de support (2) et un élément de contact (3); le dit tirant (1) présente une extrêmité à section hexagonale (17) pour permettre son vissage dans le disque de support (2), alors qu'il est cylindrique et fileté (en 4) sur une partie de sa longueur et terminé à l'autre extrémité par un bouton d'accrochage (6) séparé de la partie filetée (4) par une tige courte cylindrique (5) de diamètre réduit pour l'accoupler à l'un (14) desdits éléments tubulaires, ladite partie filetée (4) peut être vissé à l'intérieur du trou fileté (10) prévu au centre du disque de support (2) qui est muni d'une circonférence crénelée, divisée en deux zones (7,8) par une rainure (9) médiane pour le fixer dans l'autre (18) desdits éléments tubulaires; l'élément de contact (3) étant formé pour permettre son placement entre lesdits éléments tubulaires à assembler.

2. Joint de montage selon la revendication 1, caractérisé en ce que l'élément de contact (3) consiste en un bouchon, moulu dans un matériau plastique, de tels dimensions qu'il peut être enfilé en butée dans les extrémités des éléments tubulaires du rayon d'étagères, et troué au centre pour pouvoir être traversé librement par le bouton d'accrochage (6) ainsi que par la partie filetée (4), et en ce que ledit bouchon présente un siège constitué par un creux circulaire (13) et est ébrasé avec deux plans latéraux (12) à 45°, aptes à s'arrêter exactement sur la surface latérale des éléments tubulaires (14) avec lesquels on réalise le rayon.

3. Procédé d'assemblage des éléments tubulaires des rayons d'étagères par le joint de montage selon les revendications 1 et 2, caractérisé en ce qu'un disque de support (2) à circonférence crénelée est fixé avec des points de poinçonnement à l'intérieur et à proximité de chaque extrémité des éléments tubulaires horizontaux (18) du rayon, éléments qui présentent une boutonnière spéciale (22) transversale, à travers laquelle il est possible, grâce à une clé adaptée, d'accoupler ces éléments à l'extrémité hexagonale (17) des tirants de traction (1) en vissant dans un sens ou dans l'autre la partie filetée (4) dans le disque de support (2) fixé, pour obtenir la sortie complète ou bien la rentrée totale du bouton d'accrochage (6) qui est destiné à s'introduire et à s'arrêter dans des fentes adaptées exécutées le long des montants tubulaires (14) du rayon, ces fentes présentent une boutonnière (15) qui a un diamètre légèrement supérieur à celui du bouton d'accrochage (6) et également une gorge de boutonnière (16) dont la largeur est à peine supérieure au diamètre de la tige courte (5) qui divise le bouton d'accrochage (6) de la partie filetée (4).

**Patentansprüche**

1. Verbindungsstück, bestehend aus mehreren Elementen von der Art eines geschnittenen Zugbolzen (1), der in ein geschnittenes Hauptloch (10) einer Haltescheibe (2) eingeschraubt wird, für die Montage von röhrenförmigen Elementen (14, 18) von Regalen, ist dadurch gekennzeichnet, daß es aus nur drei Elementen besteht: aus dem geschnittenen Zugbolzen (1), der Haltescheibe (2) und dem Kontaktelement (3). Der vorhingenannte Zugbolzen (1) weist eine hexagonale Spitze (17) auf, um auf diese Art in die Haltescheibe (2) eingeschraubt werden zu können. Auf der anderen Seite besitzt der Zugbolzen einen Einhängknopf (6), der vom geschnittenen Teil (4) durch einen kurzen zylinderförmigen Stiel (5), der einen reduzierten Durchmesser aufweist, getrennt ist. Er wird dann mit einem (14) der vorhingenannten röhrenförmigen Elementen verbunden. Der geschnittene Teil (4) kann in ein geschnittenes Loch (10) festgeschraubt werden, das in der Mitte der Haltescheibe (2) vorgesehen ist. Die Haltescheibe (2) hat einen gerändelten Umfang und ist durch eine mittlere Rille (9), die zur Befestigung des anderen (18) der vorhingenannten röhrenförmigen Elementen dient, in zwei Teile (7, 8) geteilt. Das Kontaktelement (3) ist so geformt, um ein Positionieren zwischen den vorhingenannten röhrenförmigen Elementen zu ermöglichen.

2. Das Verbindungsstück ist nach Patentanspruch 1 dadurch gekennzeichnet, daß das Kontaktelement (3) aus einem Plastikverschluß besteht, der so groß ist, um in die Enden der röhrenförmigen Elemente des Regals durch Schlagen hineingepaßt zu werden. Dieser Verschluß besitzt in der Mitte ein Loch, in das der Einhängeknopf (6) und der geschnittene Teil (4) paßt. Weiterhin ist das Verbindungsstück dadurch gekennzeichnet, daß der vorhingenannte Einhängeknopf einen Sitz hat, der eine runde Vertiefung (13) aufweist und von zwei seitlichen 45° schrägen Ebenen (12) begrenzt ist. Er paßt ganz genau in die seitliche Oberfläche der röhrenförmigen Elementen (14), mit denen das Regal zusammengesetzt wird.

3. Montageverfahren für röhrenförmige Elemente von Regalen durch ein Verbindungsstück, ist nach Patentanspruch 1 und 2 dadurch gekennzeichnet, daß eine Haltescheibe (2) mit gerändeltem Kreisumfang durch Dornen im Inneren und in der Nähe jedes Endes der horizontalen röhrenförmigen Elemente (18) des Regals fixiert ist. Diese Elemente (18) weisen ein passendes transversales Loch (22) auf, durch das es möglich ist, den geschnittenen Teil (4) durch einen für die hexagonale Spitze der Zugbolzen (1) geeigneten Schraubenschlüssel, in die Haltescheiben (2) einzuschrauben, um so den Einhängeknopf (6) hinein- oder hinauszudrehen. Der Einhängeknopf (6) kommt in einen eigens vorgesehenen Schlitz, der sich auf dem röhrenförmigen Pfeiler (14) des Regals befindet, hinein. Diese Schlitze weisen ein Loch (15) mit einem im Vergleich zum Einhängknopf (6) größeren Durchmesser auf und eine Vertiefung (16), die etwas breiter ist als der Durchmesser des kurzen Stiels (5), der den Einhängeknopf (6) vom geschnittenen Teil (4) trennt.

**Claims**

1. Mounting joint made up of several elements of the threaded bar type (1), which is screwed into a central threaded hole (10) of a support disc (2) for the assembly of tubular elements (14, 18) of shelving units, characterised by the fact that it is made up of only three elements: the threaded bar (1), the support disc (2) and a connecting element (3); the abovementioned threaded bar has an end (17) with a hexagonal section to allow it to be screwed into the support disc (2), while it is cylindrical and threaded along a part of its length terminating at the other end in a hooking button (6), separated from the threaded part (4) by a short cylindrical stem (5) of reduced diameter for coupling with one (14) of the abovementioned tubular elements. The abovementioned threaded part (4) can be screwed inside a threaded hole (10) at the centre of the support disc (2), which is provided with a knurled circumference divided into two areas (7, 8) by a groove (9) in the middle for fixing the other (18) of the abovementioned tubular elements; the connecting element is shaped so as to allow it to be positioned between the aforementioned tubular elements to be assembled.

2. Mounting joint, according to claim 1, characterised by the fact that the connecting element (3) is made up of a cap, moulded in plastic material, and dimensioned so as to be able to be nested within the ends of the tubular elements of the shelf and perforated at the centre so that it can be freely crossed by the hooking button (6) and the threaded part (4) and characterised by the fact that the above button has a housing, made up of a circular groove (13), with two lateral planes (12) angled at 45°, which abuts exactly on the lateral surface of the tubular elements (14) which comprise the shelving unit.

3. Procedure for assembling the tubular elements of shelves by means of the mounting joint according to claims 1 and 2, characterised by the fact that a support disc (2) with knurled circumference and fixed by means of punching points to the inside and in proximity of each end of the horizontal tubular elements (18) of the shelving unit, which have a special transversal groove (22), by means of which it is possible to couple these elements, due to a suitable key at the hexagonal end (17) of the bars (1), by screwing the threaded part (4) in the support discs (2) in one direction or the other so as to obtain the total extraction, or vice-versa the total re-entry of the hooking button (6), which is to be inserted within special slits along the tubular elements (14) of the shelving unit, each of said slits having an eye (15), the diameter of which is slightly greater than the hooking button (6) and an eye loop (16), the width of which is slightly greater than the diameter of the short stem (5) which divides the hooking button (6) from the threaded part (4).

0 072 358

FIG. 1

FIG. 2

FIG. 3

FIG. 4